Europäisches Patentamt

European Patent Office

Office européen des brevets

(11) Publication number: **0 128 555**
**A2**

# (12) EUROPEAN PATENT APPLICATION

(21) Application number: **84106573.3**

(51) Int. Cl.³: **H 04 N 7/16**

(22) Date of filing: **08.06.84**

(30) Priority: **10.06.83 US 503393**

(43) Date of publication of application: **19.12.84**
**Bulletin 84/51**

(84) Designated Contracting States: **AT BE CH DE FR GB IT LI LU NL SE**

(71) Applicant: **TOCOM, INC., P.O. Box 47066, Dallas Texas 75247 (US)**

(72) Inventor: **Storey, Robert W., 3316 Royal Lane, Dallas Texas 75229 (US)**
Inventor: **Martin, Thomas F., 1629 Villanova Drive, Richardson Texas 75081 (US)**
Inventor: **Schoeneberger, Carl F., 2813 Staffordshire, Carrollton Texas 75006 (US)**
Inventor: **Campbell, John G., 601 West Northgate, Irving Texas 75062 (US)**
Inventor: **Chenoweth, John Stephen, 1405 Angelina Bend Drive, Denton Texas 76201 (US)**
Inventor: **Bundens, Allan B., Jr., 1831 Clear Creek, Carrollton Texas 75007 (US)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

(54) **Prepaid pay-per-view television method and apparatus.**

(57) A method and apparatus are disclosed for utilization with pay-per-view television systems in which selected data and pay television programs are transmitted from a central station to a remote subscriber's location. Predetermined credit unit amounts are periodically transmitted by the central station subsequent to a request and appropriate payment by a subscriber. A nonvolatile data storage device is located at the subscriber's location and is utilized to store these credit units. Each pay-per-view television program transmitted by the central station includes an associated cost which may be transmitted by means of an associated debit signal indicative of the credit unit cost for viewing that program or which may be fixed for all programs. Upon selection of a particular program by the subscriber, by means of a subscriber input unit, and verification of a sufficient amount of credit units stored in the data storage device, a control device is utilized to couple the program to the subscriber's television receiver. The control device is also utilized to decrement the amount of credit units stored in the data storage device by an amount equal to the cost of the selected program. In a preferred embodiment of the present invention, graphics generation circuitry is utilized to display to the subscriber the various credit unit amounts stored and utilized.

## PREPAID PAY-PER-VIEW TELEVISION METHOD AND APPARATUS

### BACKGROUND OF THE INVENTION

This invention relates to cable or subscription television systems in general and in particular to such systems which broadcast pay-per-view programming. In one-way cable television systems, all information flows downstream and the only response possible by the user is over a telephone line, by mail, separate transmitter or other means. Since most closed circuit televisions systems today are one-way systems, the conventional manner in which pay-per-view television has been made available is through advanced ordering and payment. Typically, a subscriber must notify the operating company several days in advance that he wants to watch a particular program which requires payment. This approach has the disadvantage of lack of flexibility is that the order cannot be changed once it has been placed. Additionally, a last minute order cannot be made because of the delay time involved in carrying out the order.

Even in two-way closed circuit television systems, it is common for the subscriber to not place an order for a pay-per-view program until shortly before the program is transmitted. If many subscribers wait until the last minute, the system can easily become overloaded, causing unnecessary delays which would result in the subscribers not being able to "impulse" order the program desired. This difficulty in "impulse buying" is a major detriment for closed circuit television operators. Impulse buying is extremely lucrative for the operating company as well as very attractive for the user, who would often prefer to wait until the last minute before committing himself.

-2-

0128555

## SUMMARY OF THE INVENTION

The present invention is preferably utilized in a one-way closed circuit system in which the user is periodically given the opportunity to order in advance a certain number of credit units for storage in his user control box, called a "converter". Once ordered, the credits are downloaded into the converter and can be drawn upon at will. The converter maintains a current total of the user's credits and displays that information to the user. The converter communicates with the central computer by a low priority method such as telephone dialer on a periodic basis to update the computer on the credits used and the programs watched by the user. Alternately, the user provides the operator with a periodic report, which indicates the pay programs watched during that time period and orders a new amount of credits to be downloaded into the converter. In two-way cable systems the converter can transmit the account information upstream at low priority times when the system is not in heavy use.

In a preferred embodiment of the present invention, a data storage device is provided at the remote subscriber's location for storage of credit unit information transmitted to the subscriber's location from a central station. A comparison circuit is utilized to compare the credit cost of a particular program selected by the subscriber with the total amount of credits stored in the data storage device. If a sufficient number of credits is present the cost of viewing the selected program is subtracted from the total credits stored and the program is coupled to the subscriber's television receiver.

In summary, the foregoing system enables the user to order credits ahead of time and download the credit information into the converter. The user's converter stores the credit information in a nonvolatile memory. The user is thereby enabled to "impulse purchase" a pay program at the last possible moment and be instantly debited from his established credit amount. The user's converter carries out all the work and does not need to have an immediate upstream channel to the computer for any verification or other reason. Reporting is carried out by the user himself or by the converter through low priority, low speed channels. This system thereby provides a high degree of flexibility which allows the user to impulse purchase a program at the last moment. In this manner, one-way closed circuit television systems may be utilized for impulse pay-per-view program purchasing. Moreover, credit information and pay-per-view program viewing history is stored in nonvolatile memory which cannot be lost in the event of power disruption.

The concept of the present invention is not necessarily limited to cable television but includes subscription television or any other closed circuit television system. The process may be enabled by a converter as discussed in the preferred embodiment, by a decoder in a subscription television system or by any other home user box which has sufficient control capability to download and store credits ahead of time and store data relating to credits use and programs viewed.

BRIEF DESCRIPTION OF THE DRAWINGS

The novel features believed characteristic of the invention are set forth in the appended claims. The invention itself; however, as well as a preferred mode of use, further objects and advantages thereof, will best be understood by reference to the following detailed description of an illustrative embodiment when read in conjunction with the accompanying drawings, wherein:

Figure 1 is a schematic diagram depicting a pay television system which incorporates the novel pay-per-view method and apparatus of the present invention;

Figure 2 is a block diagram of a preferred embodiment of the addressable converter of the present invention as shown in Figure 1;

Figure 3 is a block diagram of the converter control logic unit shown in Figure 2;

Figure 4 is a logic flow diagram of the operation of the pay-per-view control system of the present invention;

Figure 5 is a perspective view of the remote control unit shown in Figure 2; and

Figure 6 is a schematic diagram of an alternate embodiment of a pay television system which incorporates the novel pay-per-view method and apparatus of the present invention.

## DETAILED DESCRIPTION OF THE PREFERRED EMBODIMENT

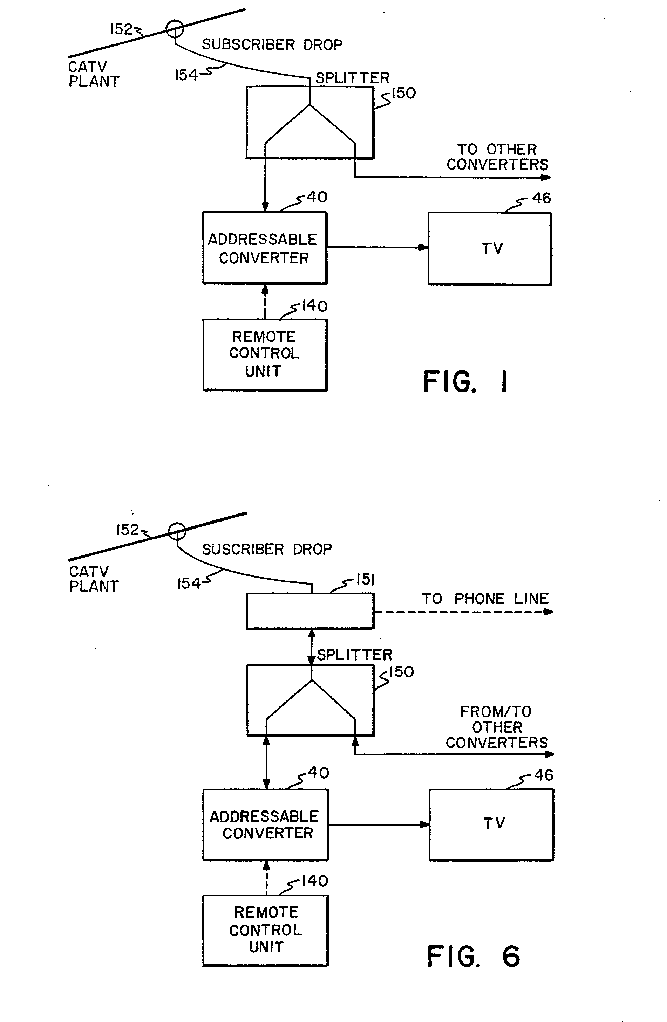

With reference now to the figures and in particular with reference to Figure 1, there is depicted a schematic diagram of a pay television system which may incorporate the novel pay-per-view method and apparatus of the present invention. As can be seen in Figure 1, an addressable converter 40 is connected in a stand alone, one-way configuration between a conventional RF splitter unit 150 and the subscriber's television receiver 46. RF signals from cable TV plant 152 are transmitted by way of a subscriber drop 154 to a conventional RF splitter 150 where they are separated and sent to a plurality of addressable converters such as converter 40. A remote control unit 140 for remote usage by a subscriber in controlling addressable converter 40 is an optional feature of this system. With certain variations as will be described herein, addressable converter 40 may be implemented utilizing an addressable converter unit such as the model 5504B manufactured by Tocom, Incorporated of Dallas, Texas.

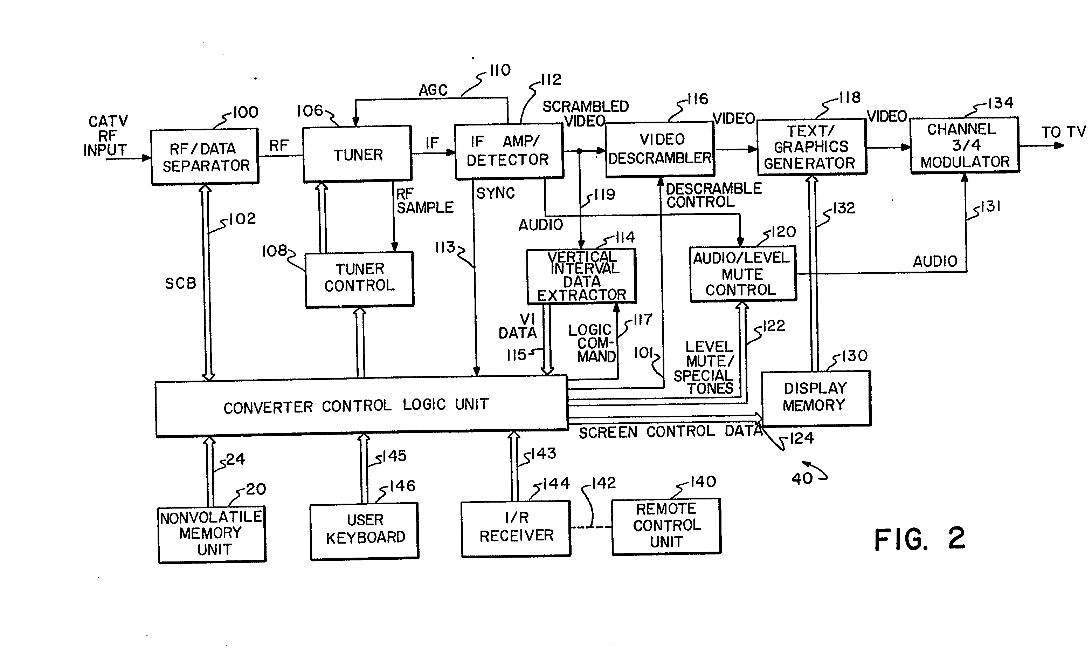

Referring now to Figure 2, the addressable converter unit 40 of Figure 1 is shown in greater detail. Converter 40, under direction of converter control logic unit 104, processes the data and pay television programs received from cable TV plant 152 at RF/data separator 100 and provides video and audio output for a standard television receiver, preferably on VHF channels 3 or 4.

The RF video information representative of a plurality of pay television programs received by RF/data separator 100 is coupled to tuner 106, which is preferably a conventional tuning unit utilizing a sliding band pass filter and a band switch front end that is tuned with a phase lock loop control. The RF output signals are detected by IF amplifier and detector 112 to provide a scrambled base-band video signal and a separate audio signal. Two-stage automatic gain control on feedback line 110 is provided to optimize noise reduction.

A data extractor 114 is connected to the scrambled video output of IF amplifier and detector 112. Data extractor 114 provides a serial data stream extracted from the vertical interval of the scrambled video signal to converter control logic unit 104. This serial data stream can include credit and debit information, as will be explained herein, or other control information for operating the present system. A logic command signal for timing control is transmitted to data extractor 114 by converter control logic unit 104 on line 117. IF amplifier and detector unit 112 also generates a synchronizing signal from the video signal which is transmitted to converter control logic unit 104 on line 113.

A conventional video descrambler unit 116 processes the scrambled base-band video signal from tuner 106 and provides a descrambled base-band video signal which is directed to a text/graphics generator 118. A scramble/descramble timing signal is generated at cable TV plant 152 and transmitted to addressable converter 40 to control this operation. The channel sound information is amplitude adjusted or muted by an audio level/mute control unit 120 which is controlled by a signal on data line 122 from converter control logic unit 104.

Text/graphics generator 118 is provided to display characters and graphic signals that have been transmitted on the vertical interval or generated by converter control logic unit 104. Converter control logic unit 104 also directs screen control data on data link 124 to a display memory 130 which in turn sends the formatted display characters along data link 132 to text/graphics generator 118 for display.

Text/graphics generator 118 preferably includes a plurality of video switches which may be utilized to bypass text/graphics generator 118 with the channel video. Optionally, the video switches also permit the channel number display and various credit unit displays to be superimposed on the video signal of the channel which is being presented. The output of text/graphics generator 118 is connected to a modulator 134 which in turn is connected to a subscriber's television receiver.

In a preferred embodiment of this system, the subscriber's television receiver is coupled to a power outlet on addressable converter 40 which is enabled on command from a user keyboard 146 connected to converter control logic unit 104. All manual user inputs required by the system are preferably keyed in on user keyboard 146. Alternately, the subscriber may provide inputs from a remote control unit 140 having a keyboard similar to

0128555

user keyboard 146. Data is preferably sent from remote control unit 140 via an infrared wireless link 142 to a conventional infrared receiver 144 which is connected to converter control logic unit 104. Hence, converter control logic unit 104 receives input data from the vertical interval data extractor 114 and from the subscriber via keyboard 146 or remote control unit 140.

An important feature of the present invention and a variation from known applications of addressable converter 40 is the utilization of nonvolatile memory unit 20 which is coupled to converter control logic unit 104 by means of memory bus 24. As discussed above, a serial data stream encoded into the vertical interval is extracted by data extractor 114 and may include a predetermined credit unit amount transmitted from cable television plant 152 to be stored in nonvolatile memory unit 20. This credit information is coupled from data extractor 114 to converter control logic unit 104 by data path 115.

In a preferred embodiment of the present invention, memory device 20 must be implemented utilizing a nonvolatile memory unit to prevent the loss of credit unit data in the event of a power loss at the subscriber's location. Therefore, memory unit 20 may be implemented utilizing an electrically erasable read only memory (EEPROM) or a low power, CMOS random access memory with a capacitive or battery alternate power source. The credit unit amounts stored in nonvolatile memory unit 20 are utilized by the subscriber in a manner which will be described herein, to purchase certain pay-per-view pay television programs. Additionally, in a preferred embodiment of the present invention, nonvolatile memory unit 20 can be utilized to store certain other system parameters as will be explained herein.

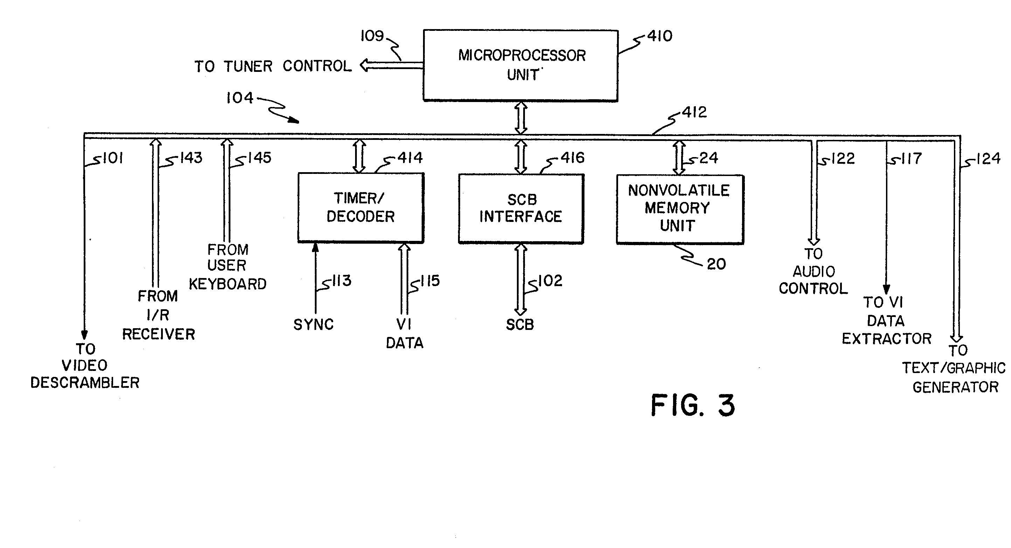

Referring now to Figure 3, converter control logic unit 104 is shown in greater detail. The central function of converter control logic unit 104 is preferably carried out by a microprocessor unit 410. Microprocessor 410 is preferably a single microprocessor chip containing a random access memory, a read only memory and a timer. Microprocessor unit 410 interfaces between tuner control unit 108 of addressable converter 40 and a two way data link 412 which connects it to the remainder of converter control logic unit 104.

Timer decoder unit 414 is preferably connected to bus 412 and receives data from data extractor 114 on line 115. The data is then buffered and decoded by timer/decoder unit 414 preparatory to being transmitted to microprocessor unit 410. In addition. timer decoder unit 414 receives sync pulses from IF amplifier detector 112 on line 113. Unit 414 includes line counting logic for determining when data is to be received on the vertical interval.

A subscriber control bus (SCB) interface unit 416 receives incoming data from subscriber control bus 102 relating to the control functions of addressable converter 40. The subscriber control bus data is processed by interface unit 416 and transmitted to microprocessor 410 in a manner well known in the art.

Nonvolatile memory unit 20 is connected by way of memory bus 24 to microprocessor 410. In addition to the aforementioned credit and debit information, nonvolatile memory unit 20 preferably contains a number of data codes which do not require changing in the normal operation of the system and which uniquely identify addressable converter 40. These data codes include the identification number of addressable converter 40, the frequency configuration acceptable for addressable converter 40, and the "home channel" number, that is the channel number to which addressable converter 40 will be tuned in the event of an emergency alert signal.

In a preferred embodiment of the present invention, units 410, 414, 416 and 420 are all conventional integrated circuits readily available in the marketplace. Suitable integrated circuits for microprocessor 410 and timer decoder unit 414 are circuit numbers 8048 and 8041 respectively, both manufactured by Intel Corporation. A suitable integrated circuit for subscriber control bus interface unit 416 is a universal asynchronous receiver transmitter (UART) circuit Model 6402 manufactured by Intersil Corporation.

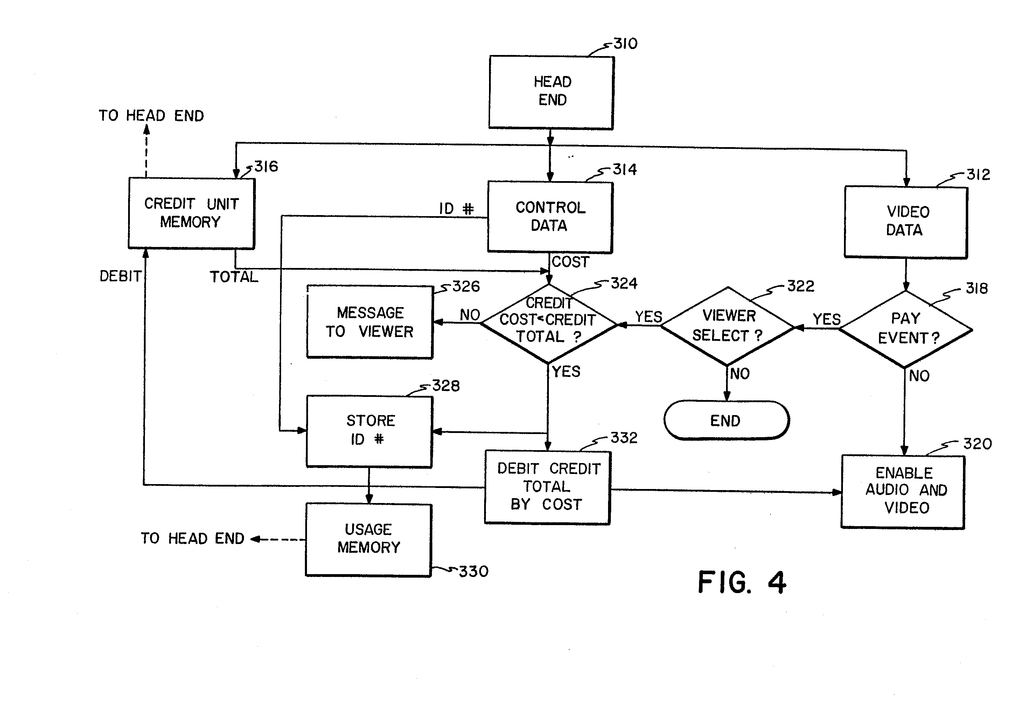

Referring now to Figure 4 a logic flow diagram is depicted describing the operation of addressable converter 40 as modified by the inclusion of nonvolatile memory unit 20 and operated utilizing the novel pay-per-view television method of the present invention. Reference should also be made to Figures 2 and 3 for the various addressable converter components utilized. The process begins at step 310 in which selected data and video information is transmitted from the cable TV plant central station to addressable converter 40. The video data is coupled to video data receiver 312, control data including identification numbers for various pay-per-view television programs and the cost associated with each selected pay-per-view program are coupled to control data register 314 and a predetermined amount of credit units may be periodically transmitted from the central station of the cable television plant to credit unit memory 316. In a preferred embodiment of the present invention, the predetermined amount of credit units to be transmitted from the central station is ordered and paid for by the subscriber with a monthly invoice and the transmission of credit units to credit memory 316 occurs subsequent to such payment. Those skilled in the art will appreciate that in an alternate embodiment of the present invention it may be desirable to utilize a fixed cost associated with all pay-per-view programs and omit transmitting a separate cost with each program.

The video information received by addressable converter 40 is examined in decision step 318 and a determination is made whether or not the video data pertains to a pay-per-view event. In the event that the video data does not pertain to a pay-per-view event the video descrambler 116 is activated by block 320 and the video signal is enabled to the subscriber's television receiver.

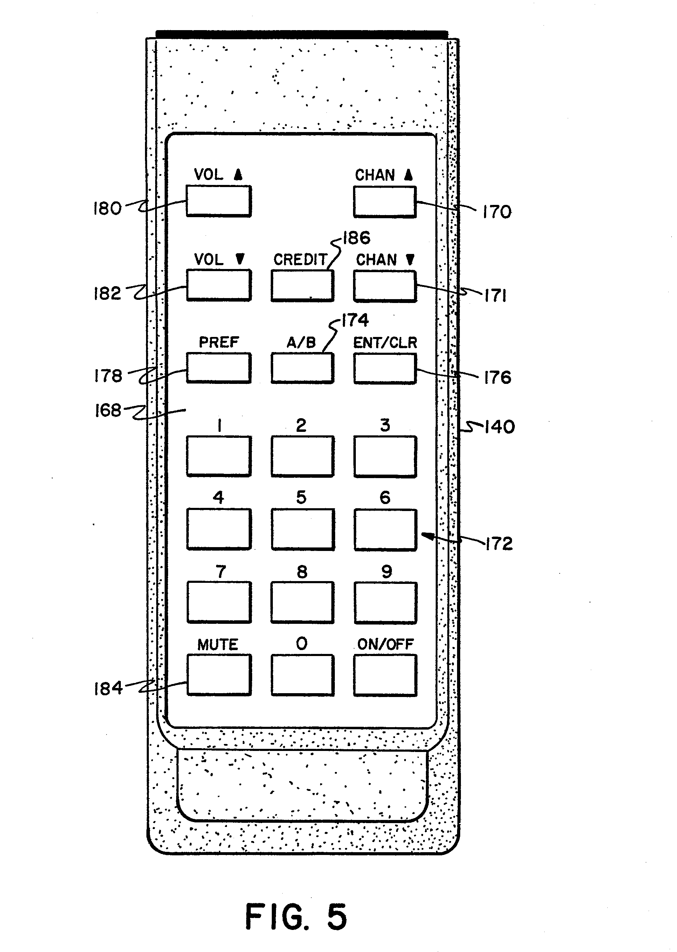

In the event that the video data being received pertains to a pay-per-view event, decision block 322 is utilized to determine whether or not the viewer has selected the pay-per-view event for viewing. The selection of a particular pay-per-view event by the subscriber may be accomplished by entering a preselected code sequence utilizing user keyboard 146 or remote control unit 140 and the keyboards associated therein as will be described with respect to Figure 5. In the event that the viewer does not select the pay-per-view event no further action will take place.

If the subscriber does select a particular pay-per-view event, decision step 324 is utilized to compare the cost of the selected pay-per-view event with the credit unit total currently stored in credit unit memory 316. In the event that insufficient credit units are stored in credit memory 316 to purchase the selected pay-per-view event, step 326 may be utilized in conjunction with converter control logic unit 104, display memory 130 and text/graphics generator 118 to provide a visual message to the subscriber that insufficient credit units exist in credit unit memory 316 to purchase the desired pay-per-view program.

In the event that a sufficient amount of credit units are stored in credit unit memory 316 to permit viewing of a selected pay-per-view television program an enable signal is generated by decision step 324 and the enable video step is utilized to permit video descrambler 116 to couple the selected pay-per-view television program to the television receiver. Additionally, the output of decision step 324 is also utilized to transfer the identification number associated with the selected pay-per-view television program from buffer storage 328 to usage memory 330.

In a preferred embodiment of the present invention, usage memory 330 and credit unit memory 316 are implemented utilizing a single nonvolatile memory unit. Finally, the enable signal is also utilized to alter the credit unit amount stored in credit unit memory 316 by debiting that amount in an amount equal to the cost of viewing the selected pay-per-view television program. The total amount of credit units remaining in credit unit memory 316, the number of credit units utilized during a specified reporting period and the usage data stored in usage memory 330 may simply be transmitted to the central station of the cable television plant in a two-way cable television system, or by utilizing a low priority communications link such as a telephone dialer or mail invoice in one-way cable television systems. In one preferred embodiment of the present invention the credit unit data and usage data (i.e. what programs were purchased) are transmitted to the central station or displayed to the subscriber in a coded format to inhibit possible variation of that data by the subscriber. Those skilled in the art will appreciate that numerous self checking coding schemes may be utilized to accomplish this purpose. Additionally, the credit unit and usage information stored within the system can preferably be retained and displayed to the subscriber utilizing the television receiver graphics capability or an associated optical display.

Referring now to Figure 5, there is depicted a perspective view of remote control unit 140 of Figure 2. As can be seen, remote control unit 140 includes a keyboard 168 which is identical to the keyboard associated with user keyboard 146. The input from keyboard 168 determines the television and text outputs to be viewed by the subscriber on his television receiver. In the depicted embodiment of the present invention, addressable converter 40 provides for the tuning of up to fifty-five television program channels on a broad band cable system. Converter 40 selectively processes each of these channels and outputs them individually to a standard television set on channel 3 or 4 for viewing in the home. Converter 40 and its attendant remote control unit 140 can be used as a stand alone conventional cable TV converter and in certain alternate embodiments is also compatible as an expansion module for a two-way interactive system.

Keyboard 168 includes a plurality of keys operable to vary the operation of addressable converter 40. Numeral keys 172 may be utilized to directly enter a particular channel or channel select keys 170 and 171 may be utilized to cycle through the selected channels in an upward or downward direction. For two cable systems, cable A or cable B may be selected by pressing the A/B key 174. In a typical channel select mode, the channel number which is selected is displayed on the television receiver screen or an associated optical display each time the channel key is depressed by utilizing text/graphics generator 118 in the manner described herein.

Because of the large number of available channels typically provided in a cable television system, a subset of preferred channels may be stored for quick access on addressable converter 40. These channels are stored by pressing the ENTER/CLEAR key 176 first and then the PREF key 178 while the unit is in the channel select mode. Remote control unit 140 will then generate the necessary signals to display the ten preferred channel assignments, if any, on the television receiver screen. The subscriber can then enter or modify the preferred channels utilizing the number keys and exit pressing the channel keys 170 or 171. Preferred channels are accessed after programming by pressing the PREF key 178 each time the key is pressed, addressable converter 40 steps through the preferred channel and displays the next selected channel in sequence.

0128555

Remote control unit 140 also provides for a complete volume control and sound muting by pressing the "sound up" key 180, the "sound down" key 182 or the mute key 184. Preferably sound is always muted for channels that have not been authorized. The sound is also muted for channels providing text and graphic programming.

One aspect of the pay-per-view system of the present invention is operated utilizing the credit key 186 which may be depressed to display the credit unit amount stored in nonvolatile memory unit 20. Preferably the credit unit cost of a selected pay-per-view television program is displayed on the television screen or by utilizing an actual display. If the subscriber desires to determine whether or not he has sufficient credit units to purchase a pay-per-view program with a displayed cost, he simply depresses credit key 186 to display his credit total. Display of the appropriate credit unit total may be accomplished utilizing text/graphics generator 118 under the control of converter control logic unit 104 or by a separate optical display unit. If sufficient credits are present the subscriber may purchase the program by entering a selected numerical code utilizing numeral keys 172. This code prevents children and unauthorized individuals from purchasing pay-per-view programming.

Referring now to Figure 6, there is depicted a schematic diagram of an alternate embodiment two-way cable television system which incorporates the novel pay-per-view method and apparatus of the present invention. As can be seen in Figure 6, addressable converter 40 is connected in a multiple converter, two-way configuration between a conventional RF splitter 150 and the subscriber's television receiver 46. RF signals from cable TV plant 152 are transmitted by way of a subscriber drop 154 through splitter 150 where they are separated and sent to a plurality of addressable converters such as addressable converter 40. As before, a remote control unit 140 is depicted as associated with addressable converter 40 in this embodiment. The major difference between this system and the system of Figure 1 is the inclusion of communications device 151. Communications device 151 is utilized, in this embodiment of the present invention, to send credit unit data and program viewing information (encoded or uncoded format) to the central station. Communications device 151 may comprise a simple RF transmitter which utilizes well known FSK transmission techniques to transmit this data via the cable itself or, may be implemented utilizing a telephone dialer which transmits this data to the central station via a telephone line.

Although the invention has been described with reference to a specific embodiment, this description is not meant to be construed in a limiting sense. Various modifications of the disclosed embodiment as well as alternative embodiments of the invention will become apparent to persons skilled in the art upon reference to the description of the invention. It is therefore contemplated that the appended claims will cover any such modifications or embodiments that fall within the true scope of the invention.

0128555

What is claimed is:

1. In a pay television system in selected data including a pay television program is transmitted from a central station to a remote subscriber's location having visual display means, data storage means, subscriber input means and control means for selectively coupling said pay television program to said visual display means, the process comprising:

storing a credit unit amount in said data storage means;

transmitting a credit signal representative of a predetermined credit unit amount from said central station to said remote subscriber's location;

incrementing said credit unit amount stored in said data storage means by said predetermined credit unit amount;

comparing a credit unit amount charged for viewing a selected pay television program with said credit unit amount stored in said data storage means;

generating an enable signal in response to said comparison;

decrementing said credit unit amount stored in said data storage means by said credit unit amount charged for viewing said selected pay television program in response to both said enable signal and a select signal from said subscriber input means; and

causing said control means to couple said pay television program to said visual display means in response to said decrementing.

2. The process according to Claim 1 wherein said enable signal is generated when said credit unit amount stored in said data storage means is greater than said credit unit amount charged for viewing said selected pay television program.

3. The process according to Claim 1 wherein said control means decodes a coded television program signal in response to said decrementing.

-14-

0128555

4. The process according to Claim 1 wherein the transmitting step is performed subsequent to a purchase of said predetermined credit unit amount by a subscriber.

5. The process according to Claim 1 wherein generation of said enable signal includes the step of displaying said credit unit amount stored in said data storage means on said visual display means.

6. The process according to Claim 1 further including the step of displaying said credit unit amount stored in said data storage means on said visual display means before said decrementing step.

7. The process according to Claim 1 further including the step of displaying an identification signal representative of said selected pay television program on said visual display means in response to a signal from said subscriber input means.

8. The process according to Claim 1 further including the step of displaying said credit unit amount charged for viewing said selected pay television program on said visual display means.

9. The process according to Claim 1 further including the step of displaying said credit unit amount stored in said data storage means on said visual display means after said decrementing step.

10. The process according to Claim 1 further including the step of transmitting said credit unit amount stored in said data storage means to said central station after said decrementing step.

0128555

11. The process according to Claim 1 further including the step of transmitting an identification signal representative of said selected pay television program to said central station.

12. The process according to Claim 1 further including the step of transmitting the credit amount utilized by a subscriber during a selected reporting period to said central station.

13. The process according to Claim 1 further including the step of transmitting said credit unit amount charged for viewing a selected pay television program with said selected pay television program.

14. The pay-per-view control system according to Claim 13 wherein said data storage means comprises a nonvolatile digital memory circuit.

0128555

15. In a pay television system in selected data including a pay television program is transmitted from a central station to a remote subscriber's location having visual display means, data storage means, subscriber input means and control means for selectively coupling said pay television program to said visual display means, the process comprising:

storing a credit unit amount in said data storage means;

transmitting a credit signal representative of a predetermined credit unit amount from said central station to said remote subscriber's location;

incrementing said credit unit amount stored in said data storage means by said predetermined credit unit amount;

comparing a credit unit amount charged for viewing a selected pay television program with said credit unit amount stored in said data storage means;

generating an enable signal in response to said comparison;

decrementing said credit unit amount stored in said data storage means by said credit unit amount charged for viewing said selected pay television program in response to both said enable signal and a select signal from said subscriber input means; and

causing said control means to couple said pay television program to said visual display means in response to said decrementing.

16. The process according to Claim 15 wherein said enable signal is generated when said credit unit amount stored in said data storage means is greater than said credit unit amount charged for viewing said selected pay television program.

17. The process according to Claim 15 wherein said control means decodes a coded television program signal in response to said decrementing.

0128555

18. The process according to Claim 15 wherein the transmitting of a predetermined credit unit amount is performed subsequent to a purchase of said predetermined credit unit amount by a subscriber.

19. The process according to Claim 15 wherein generation of said enable signal includes the step of displaying said credit unit amount stored in said data storage means on said visual display means.

20. The process according to Claim 15 further including the step of displaying said credit unit amount stored in said data storage means on said visual display means before said decrementing step.

21. The process according to Claim 15 further including the step of displaying an identification signal representative of said selected pay television program on said visual display means in response to a signal from said subscriber input means.

22. The process according to Claim 15 further including the step of transmitting the credit amount utilized by a subscriber during a selected reporting period to said central station.

23. The process according to Claim 15 further including the step of displaying said credit unit amount charged for viewing said selected pay television program on said visual display means.

24. The process according to Claim 15 further including the step of displaying said credit unit amount stored in said data storage means on said visual display means after said decrementing step.

25. The process according to Claim 15 further including the step of transmitting said credit unit amount stored in said data storage means to said central station after said decrementing step.

26. The process according to Claim 15 further including the step of transmitting an identification signal representative of said selected pay television program to said central station.

27. In a pay television system in which selected data including a plurality of pay television programs is transmitted from a central station to a visual display means located at a remote subscriber's location, a pay-per-view control system comprising:

data storage means disposed at said remote subscriber's location for storing a credit unit amount transmitted by said central station;

subscriber input means for permitting a subscriber to select a particular one of said plurality of pay television programs;

comparison means for comparing a credit unit cost associated with said particular one of said plurality of pay television programs with said credit unit amount stored in said data storage means;

means for decrementing said credit unit amount stored in said data storage means by said credit unit cost associated with said particular one of said plurality of said pay television programs in response to both said selection and said comparison; and

control means for coupling said particular one of said plurality of pay television programs to said visual display means in response to said decrementing.

28. The pay-per-view control system according to Claim 27 wherein said data storage means comprises a nonvolatile digital memory circuit.

0128555

29. The pay-per-view control system according to Claim 27 wherein said subscriber input means comprises a remote control keyboard associated with said visual display means.

30. The pay-per-view control system according to Claim 27 wherein said control means includes means for decoding an encoded pay television program in response to said decrementing.

31. The pay-per-view control system according to Claim 27 wherein said credit unit cost associated with said particular one of said plurality of pay television programs is transmitted from said central station with said particular one of said plurality of pay television programs.

32. The pay-per-view control system according to Claim 27 further including means for displaying said credit unit cost associated with said particular one of said plurality of pay television programs on said visual display means.

33. The pay-per-view control system according to Claim 27 further including means for displaying said credit unit amount stored in said data storage means on said visual display means.

152

CATV
PLANT

SUBSCRIBER DROP

154

SPLITTER

150

TO OTHER
CONVERTERS

40

ADDRESSABLE
CONVERTER

46

TV

140

REMOTE
CONTROL
UNIT

FIG. 1

152

CATV
PLANT

SUSCRIBER DROP

154

151

TO PHONE LINE

SPLITTER

150

FROM/TO
OTHER
CONVERTERS

40

ADDRESSABLE
CONVERTER

46

TV

140

REMOTE
CONTROL
UNIT

FIG. 6

FIG. 2

FIG. 3

FIG. 4

FIG. 5